# EUROPÄISCHE PATENTANMELDUNG

(11) **EP 2 775 293 A1**
(43) Veröffentlichungstag der Anmeldung: **10.09.2014**
(21) Anmeldenummer: 14000801.2
(22) Anmeldetag: 06.03.2014
(51) Int. Cl.: G01N 21/84, G01N 15/08, G01N 33/46, G01N 21/898, G06T 7/00

(54) **Verfahren und Vorrichtung zur Bestimmung einer Dichteverteilung in einer Holzwerkstoffplatte**

(30) Priorität: 06.03.2013 DE 102013003744
(71) Anmelder: Fraunhofer-Gesellschaft zur Förderung der angewandten Forschung e.V., 80686 München (DE)
(72) Erfinder: Thole, Volker, DE - 38102 Braunschweig (DE); Plinke, Burkhard, DE - 38102 Braunschweig (DE)
(74) Vertreter: Cordes, Jörn Christopher

(57) **Zusammenfassung**

Die Erfindung betrifft ein Verfahren zur Bestimmung einer Porigkeit in einer Holzwerkstoffplatte (1) mit den Schritten:
- Aufnehmen einer Schmalseite (2) der Holzwerkstoffplatte (1) mit einer Kameraeinrichtung (4) nach dem Verpressen in einer kontinuierlichen Heißpresse und
- Auswerten der von der Kameraeinrichtung (4) erfassten Bilder über die Dicke der Holzwerkstoffplatte (1), wobei die Porigkeit der Holzwerkstoffplatte (1) erfasst wird.

## Beschreibung

Die Erfindung betrifft ein Verfahren und eine Vorrichtung zur Bestimmung einer Dichteverteilung in einer Holzwerkstoffplatte. Die Vorrichtung und das Verfahren sind insbesondere zur Bestimmung der Dichteverteilung in einer OSB (Oriented Strand Board) vorgesehen, bei der in einer Endlosfertigung zwischen zwei Deckschichten, deren Strands in Längsrichtung einer kontinuierlichen Förderung orientiert sind, eine Mittelschicht angeordnet ist, in der die Strands in ihrer Längsachse quer zur Vorschub- und Produktionsrichtung orientiert sind.

OSB bestehen aus Flachspänen, den sogenannten Strands, deren Längserstreckung in den jeweiligen Schichten abwechselnd senkrecht zueinander orientiert ist. Durch den Schichtaufbau, die Verwendung verschiedener Strand-Typen, die Feuchtegradienten senkrecht zur Plattenoberfläche sowie den Druck-Zeit-Verlauf beim Heißpressen der Fasermatte oder des Spänevlieses entsteht ein definiertes Rohdichteprofil in Vertikalrichtung. Bei der Vliesformung können aber auch Zonen mit in Produktionsrichtung und quer dazu stark variierender Rohdichte, also mit einer variierenden horizontalen Rohdichteverteilung, entstehen, deren Ursachen beispielsweise in der Streuung der Mittelschicht über sogenannten Fächerwalzen liegen können. Die horizontale Rohdichteverteilung bei OSB kann Schwankungen in der Größenordnung von bis zu 20% aufweisen. Da die Rohdichteverteilung und die Festigkeit einer OSB in einer strengen Abhängigkeit zueinander stehen, ergeben sich aus der Variation unerwünschte Schwankungen in der Biegefestigkeit, die minimiert werden sollen.

Lösungsansätze für das Problem bestehen beispielsweise darin, dass das Material in erhöhter Dosierung aufgestreut wird, um kritische Werte für die horizontale Rohdichteverteilung möglichst nicht zu unterschreiten. Dies führt dazu, dass ein Großteil der hergestellten OSB mit einem zu großen Materialeinsatz hergestellt wird, was die Herstellkosten erhöht.

Die DE 10 2008 027 708 A1 betrifft eine Anlage und ein Verfahren zur Herstellung von Werkstoffplatten, insbesondere MDF- oder Partikelplatten mit zumindest einer Streuvorrichtung zur Streuung einer Pressgutmatte auf einem Formband und einer die Pressgutmatte mit Druck und Wärme zu einem Plattenstrang aushärtenden, kontinuierlich arbeitenden Presse. In der Streuvorrichtung ist zumindest eine Einstellvorrichtung zur Einstellung eines vorgegebenen Flächengewichtsprofils der Pressgutmatte vor der Presse angeordnet. Über Röntgenstrahlung oder Gammastrahlung wird nach dem Aufstreuen entlang von quer über die Pressgutmatte verteilten Messvorrichtungen ein Flächengewichtsprofil in Produktionsrichtung ermittelt, um Messwerte zu erlangen, die einer Regelvorrichtung zum Vergleichen des Ist-Wertes mit einem Soll-Wert zugeführt werden. Die Verwendung von Röntgenapparaturen in der industriellen Fertigung ist apparativ sehr aufwendig, benötigt besondere Schutzvorkehrungen und darüber hinaus besonders geschultes Personal.

Die DE 10 2010 029 486 A1 betrifft ein Verfahren zur Herstellung einer mehrschichtigen Werkstoffplatte, bei der einschichtig orientiert gestreute Schichtmatten verpresst und die verpressen Schichtmatten in verschiedenen Orientierungen zueinander ausgerichtet und einem weiteren Pressvorgang zugeführt werden, so dass eine mehrschichtige Werkstoffplatte mit senkrecht zueinander ausgerichteten Orientierungen der Längserstreckung der Fasern oder Strands vorliegt.

Die DE 10 2011 004 076 A1 betrifft ein Verfahren und eine Vorrichtung zur Ermittlung der Oberflächenrauheit, bei der zur Erfassung der Tiefe der jeweiligen Oberflächenpunkte ein Laser-Triangulationsverfahren eingesetzt wird. Die dazu vorgesehene Vorrichtung weist eine Strahlungsquelle sowie einen Empfänger mit Abbildungsoptik auf. Aus der Strahlungsquelle wird ein Messstrahl auf den zu untersuchenden Gegenstand gesendet, der am Auftreffpunkt einen Messfleck erzeugt. Der Messstrahl wird unter einem stets gleichbleibenden Reflektionswinkel reflektiert und als Empfangsstrahl an den Empfänger gesendet. Je nach Tiefe der Oberfläche des Gegenstandes wird dabei ein bestimmter Versatz am Empfänger erzeugt, aus dem Rückschlüsse auf die jeweilige Tiefe des Auftreffpunktes bzw. des Oberflächenpunktes des Gegenstandes gezogen werden können.

Die DE 10 2009 003 148 A1 betrifft ein Verfahren und eine Vorrichtung zur Kompensation von sich in Maschinenrichtung auf die Qualität einer Faserbahn auswirkenden Variation in der Betriebsweise einer Maschine zur Herstellung von Faserstoffbahnen, insbesondere von Papierbahnen, Kartonbahnen oder Tissuebahnen. Zur Ermittlung von die Eigenschaften der Faserstoffsuspension oder der Faserstoffbahn zumindest mittelbar charakterisierenden Größen wie Flächenmasse, Gesamtstoffdichte, Faserstoffdichte, Füllstoffdichte, Aschegehalt oder Füllstoffgehalt, können berührungslose Systeme eingesetzt werden, die auf der optischen Erfassung mittels Licht, insbesondere Streulicht oder Durchlicht beruhen. Dazu werden über die Breite der Faserstoffbahn und entlang der Förderrichtung Messwerte erfasst und einer Steuer- und Regeleinheit zugeführt.

Die DE 102 56 797 A1 betrifft ein Verfahren zur Bestimmung der Oberflächengüte von Materialoberflächen, bei der ein digitales Bild der Oberfläche in Graustufen in einer Matrix dargestellt wird. Mehrere beliebige Reihen und/oder Spalten und/oder Diagonalen von Graustufenwerten werden aus dieser Matrix ausgewählt, wobei die Reihen oder Spalten oder Diagonalen vorzugsweise in äquidistanten Abständen voneinander gewählt werden. Die Autokorrelationsfunktionen zu jedem Satz von Graustufen werden von den Reihen, Spalten oder Diagonalen berechnet. Aus einer oder mehrerer dieser Autokorrelationsfunktionen werden eine oder mehrere Kennzahlen bestimmt, die die Eigenschaften der jeweiligen Störstellen charakterisieren.

Aufgabe der vorliegenden Erfindung ist es, ein Verfahren und eine Vorrichtung bereitzustellen, mit denen auf einfache Art und Weise Rückschlüsse über die Dichteverteilung und damit über die Qualität von Holzwerkstoffplatten gezogen werden können.

Erfindungsgemäß wird diese Aufgabe durch ein Verfahren mit den Merkmalen des Hauptanspruches und eine Vorrichtung mit den Merkmalen des nebengeordneten Anspruchs gelöst. Vorteilhafte Ausgestaltungen und Weiterbildungen der Erfindung sind in den Unteransprüchen, der Beschreibung und den Figuren offenbart.

Das erfindungsgemäße Verfahren zur Bestimmung der Dichteverteilung in einer Holzwerkstoffplatte sieht vor, dass nach dem Verpressen des Vlieses oder des Spankuchens in einer kontinuierlichen Heißpresse zumindest eine Schmalseite mit einer Kameraeinrichtung aufgenommen wird und die von der Kameraeinrichtung erfassten Bilder anschließend über die Dicke der Holzwerkstoffplatte ausgewertet werden, wobei die Porigkeit der Holzwerkstoffplatte erfasst wird. Die Erfindung beruht auf der Idee, dass sowohl die vertikale Dichteverteilung als auch die horizontale Dichteverteilung mit der Porigkeit in den Schmalflächen korrespondieren und die Dichteverteilung auch über die gesamte Horizontalerstreckung und die Breite der Holzwerkstoffplatte durch das einfache, berührungslose Inspizieren der Schmalfläche oder beider Schmalflächen entlang der Vorschubrichtung überwacht werden kann. Insbesondere über die Auswertung der Bilder über die Dicke der Holzwerkstoffplatte ist es möglich, die Porigkeit und Dichteverteilung innerhalb der Holzwerkstoff-platte über die Dicke der Platte qualitativ erfassen zu können. Während die aus dem Stand der Technik bekannten Verfahren eine Durchdringung mit Gamma-strahlung senkrecht zu der Hauptfläche der Holzwerkstoffplatten oder der Vliesbildung vorsehen und dadurch die Unterschiede zwischen einer Mittel-schicht und einer Deckschicht nicht erfassen können, kann das erfindungsge-mäße Verfahren durch die quer zur Vorschubrichtung und im Wesentlichen pa-rallel zur Hauptebene orientierten Kameraeinrichtung Informationen erhalten, ob beispielsweise große Dichteschwankungen in der Mittellage vorhanden sind, die wesentlich zu der Erfüllung der Festigkeitsanforderungen beitragen und auch nicht durch erhöhte Dichteanteile in den Deckschichten ausgeglichen werden können.

Vorteilhafterweise werden die Aufnahmen während der kontinuierlichen Fertigung durchgeführt, so dass es möglich ist, im laufenden Betrieb der kontinuierlichen Fertigung, vorteilhafterweise unmittelbar nach dem Verlassen der Presseinrichtung mit umlaufenden Pressbändern, Rückschlüsse über die Rohdichteverteilung in vertikaler und horizontaler Richtung zu erhalten.

Um die Bestimmung mit einer erhöhten Genauigkeit durchführen zu können, werden die Aufnahmen an der Schmalseite oder den Schmalseiten erst nach dem Besäumen der Holzwerkstoffplatten durchgeführt, um Streuungsvariationen insbesondere im Randbereich nicht zu berücksichtigen und nur die Qualität der tatsächlich zum Verkauf bestimmten Holzwerkstoffplatten zu überprüfen. Die Aufnahmen können vor oder nach der Aufteilung des Materialstranges in einzelne Platten aufgenommen werden.

Eine Möglichkeit zur Durchführung der Aufnahmen und zur Auswertung besteht darin, dass die Bilder mit einer Zeilenkamera aufgenommen werden, wobei der aufzunehmende Ausschnitt der Kameraeinrichtung, also der betrachtete Bereich der Schmalseite parallel zur Förderrichtung, beleuchtet wird und anschließend eine Graustufenauswertung des aufgenommenen Bildes durchgeführt wird. Die Zeilenkamera digitalisiert das Bild, wobei die einzelnen Bildpunkte oder Bildbereiche in Graustufen dargestellt werden. Ergibt sich ein konstantes Bild der Graustufenverteilung über die Länge der Holzwerkstoffplatte, also über die gesamte Länge der Schmalseite in Vorschubrichtung, ist eine konstante Rohdichteverteilung über die gesamte Plattenlänge und Plattenbreite anzunehmen, ergeben sich Änderungen in der Graustufenverteilung sowohl über die Dicke als auch über die Länge der Holzwerkstoffplatte, lässt sich daraus auf Rohdichteschwankungen schließen, die bei Überschreiten vorgegebener Grenzwerte dazu führen, dass die produzierten Holzwerkstoffplatten der geforderten Qualität nicht entsprechen. Darüber hinaus können die Werte dazu dienen, den vorgelagerten Streuprozess der Späne, Strands oder dergleichen zu überprüfen und neu einzustellen.

Ein alternatives Verfahren sieht vor, dass eine Flächenkamera als Kameraeinrichtung eingesetzt wird und dass der aufzunehmende Ausschnitt der Schmalseite mit einem Linienlicht, insbesondere mit einem Linienlaser, beleuchtet wird. Anschließend werden im Rahmen eines Triangulationsverfahrens die Abweichungen der Form der Lichtlinie erfasst und daraus Rückschlüsse über die Porigkeit und insbesondere die Porentiefe gezogen. Treten auch hier Ungleichmäßigkeiten über den Verlauf sowohl der Dicke als auch der Länge der Holzwerkstoffplatte auf, lässt dies Rückschlüsse auf eine Rohdichteschwankung zu, die zu Schwankungen innerhalb der Festigkeitstoleranzen führt. Sobald diese Toleranzen überschritten sind, wird der Produktionsprozess neu eingerichtet.

Als Holzwerkstoffplatten kommen insbesondere OSB in Frage, ebenfalls ist es möglich, dass Faserplatten, LSB (Long Strand Board), CSL (Composit Strand Lumber), Spanplatten oder auch Waferboards mit dem Verfahren untersucht werden.

Eine Ausgestaltung des Verfahrens sieht vor, dass die Periodizität der Dichteverteilung über die Vorschubrichtung ermittelt wird, um bestimmte Wiederholungen von Rohdichteschwankungen im fertigen Produkt ermitteln zu können. Dies erfolgt z.B. dadurch, dass die Messwerte kontinuierlich am Materialstrang vor dem Auftrennen zu einzelnen Platten aufgenommen werden. Dadurch wird die Periodizität der Dichteverteilung oder Dichteänderung über die Vorschubrichtung messbar, so dass die Rohdichteschwankungen im fertigen Produkt ermittelt werden können. Die Ermittelung der Periodizität ist wichtig, um ein Regelsignal für die Veränderung der Streuung zu erhalten. Beispielsweise können Fächerwalzen mit anderen Drehzahlen betrieben werden, um systembedingte Schüttdichteungleichmäßigkeiten zu beheben und die Varianzen in den Schüttdichten, insbesondere der Mittellagen, zu verringern. Insbesondere die Dichteverteilung in der Mittelschicht ist relevant und lässt Rückschlüsse über die horizontale Dichteverteilung innerhalb der OSB zu. Es ist ebenfalls möglich, dass für eine oder mehrere beliebige Ebenen innerhalb des Querschnittes eine Dichteverteilung wie oben beschrieben vorgenommen wird.

Die Vorrichtung zur Durchführung des Verfahrens sieht eine neben einer Holzwerkstoffplatte angeordnete Kameraeinrichtung vor, die unmittelbar nach dem Verlassen der Pressenlinie, insbesondere nach dem Besäumschnitt, die vorbeifahrende Schmalseite aufnimmt. Die Holzwerkstoffplatte wird dabei in der Regel durch eine Vorschubeinrichtung relativ zu der Kameraeinrichtung mit einer konstanten Geschwindigkeit verfahren, grundsätzlich ist es auch möglich, dass die Kameraeinrichtung selbst angetrieben und relativ zur Holzwerkstoffplatte entlang der Schmalseite in Förderrichtung oder entgegen der Förderrichtung transportiert werden kann. Eine Auswerteeinheit ist mit der Kameraeinrichtung gekoppelt, um die von der Kameraeinrichtung aufgenommenen Bilder über die Länge und Breite der Schmalseite auszuwerten. Die Auswertung kann entweder die Rauheit senkrecht zur Plattenebene mit einer zweidimensionalen Lasertriangulation oder aber durch die Analyse der Grauwertverteilung mit einer Zeilenkamera erfolgen. Die Lasertriangulation erfordert einen höheren technischen Aufwand, ergibt jedoch ein topografisches Bild der Oberfläche der Schmalseite, in dem den Grauwerten der Abstand des jeweiligen Pixels zu einer durch den Messaufbau gegebenen Bezugsebene zugeordnet ist. Die Grauwerteverteilung ist apparativ kostengünstiger und ergibt ebenfalls ein Bild der Oberfläche der Schmalseite. Die Zuordnung zwischen den Grauwerten und der Topografie der Oberfläche der Schmalseite ist im Verhältnis zu dem Triangulationsverfahren nicht so eindeutig, weil in der Oberfläche Poren häufig, aber nicht immer dunkler erscheinen als Spanoberflächen. Beide Verfahren, sowohl das Verfahren mit der Kameraeinrichtung in der Ausgestaltung als Zeilenkamera als auch in der Ausgestaltung als Flächenkamera, liefern Zusammenhänge zwischen den kontinuierlich anfallenden Messwerten, der vertikalen Dichteverteilung und der horizontalen Dichteverteilung innerhalb der Platten, die insbesondere durch geeignete Filterung und Frequenzanalyse der Verläufe von Grauwerten und Rauheiten längs und quer zur Schmalfläche bestimmt werden können.

Zur Aufnahme der Bilddaten ist es vorgesehen, dass zumindest eine Leuchteinrichtung dem Bildausschnitt der Kameraeinrichtung zugeordnet ist, wodurch die Qualität der Aufnahmen verbessert wird. Bei der Ausgestaltung der Kameraeinrichtung als Flächenkamera ist diese vorzugsweise als Linienlichteinrichtung, insbesondere Laser ausgebildet, bei einer Zeilenkamera oder CCD-Kamera kann eine Ringleuchte um die Kameraeinrichtung herum angeordnet sein, wodurch sich eine kompakte Baugröße und eine leichtere Ausrichtbarkeit der Vorrichtung ergibt, so dass lediglich eine Komponente senkrecht zu der Oberfläche der Schmalseite ausgerichtet werden muss.

Nachfolgend werden Ausführungsbeispiels der Erfindung anhand der beigefügten Figuren näher erläutert. Es zeigen:
Figur 1 eine perspektivische Darstellung einer Holzwerkstoffplatte oder eines Abschnittes eines Materialstranges mit Messeinrichtung;
Figur 2 eine Draufsicht der Figur 1; sowie
Figur 3 eine schematische Darstellung einer Variante in Draufsicht.

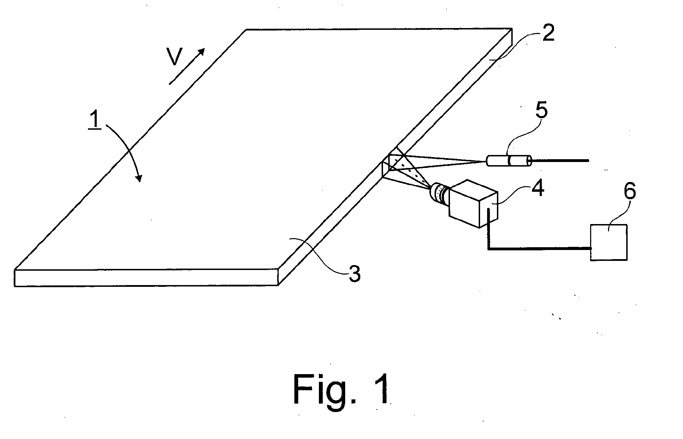

In der Figur 1 ist in einer Prinzipdarstellung eine Holzwerkstoffplatte 1 in Gestalt einer OSB dargestellt, die fertig gepresst die Heißpresse, die nicht dargestellt ist, verlassen hat. Die Holzwerkstoffplatte 1 wird in Vorschubrichtung V transportiert. Die Holzwerkstoffplatte 1 weist als Hauptfläche 3 die Oberseite auf, die durch die Seitenfläche 2 begrenzt ist. Seitlich neben der Holzwerkstoffplatte 1 ist eine Kameraeinrichtung 4 in Gestalt einer Flächenkamera angeordnet, die schräg auf die Seitenfläche 2 ausgerichtet ist. Der Bildausschnitt der Kameraeinrichtung 4 ist so gewählt, dass ausschließlich die Seitenfläche 2 aufgenommen wird. Senkrecht zur Seitenfläche 2 und senkrecht zur Vorschubrichtung V ist eine Beleuchtungseinrichtung 5 in Gestalt eines Linienlasers angeordnet, der die Seitenfläche 2 mit einer Lichtlinie beleuchtet. Die Kameraeinrichtung 4 ist in einem festen Abstand zu der Beleuchtungseinrichtung 5 installiert, so dass der Winkel zwischen der Blickrichtung der Kameraeinrichtung 4 und der Richtung des Lasers konstant ist. Die Kameraeinrichtung 4 ist mit einer Auswerteeinrichtung 6 gekoppelt, die eine Bildauswertung der aufgenommenen Bilder der Kameraeinrichtung 4 vornimmt. Die Auswerteeinrichtung 6 ist üblicherweise als Rechner ausgebildet.

Um die horizontale und vertikale Dichteverteilung und das Rohdichteprofil der fertigen Holzwerkstoffplatte 1 ermitteln zu können, wird die Rauheit senkrecht zu der Hauptebene 3 mit einem zweidimensionalen Triangulationsverfahren ermittelt. Die auf die Seitenfläche 2 projizierte Lichtlinie reflektiert in Abhängigkeit von der Porentiefe und Porengröße das Licht unterschiedlich in Richtung auf die Kameraeinrichtung 4, so dass die Kameraeinrichtung 4 bei einer vollständig geschlossenen Seitenfläche 2 eine gerade Lichtlinie aufnimmt, bei geringen und weniger tiefen Poren eine gewölbte Linie und bei großen und/oder tiefen Poren und damit gegebenenfalls auch Fehlstellen innerhalb der Schüttung eine unterbrochene Lichtlinie erfasst. Aufgrund der linienförmigen Lichtprojektion ist es möglich, über die Dicke der Holzwerkstoffplatte 1, also über die Höhe der Seitenfläche 2, eine aufgelöste Information darüber zu bekommen, wie groß die Porosität und welcher Art die Porosität ist. Darüber hinaus kann aufgrund der konstanten Vorschubgeschwindigkeit in Vorschubrichtung V eine Aussage über eine Verteilung der Rohdichteungleichmäßigkeiten in Längserstreckung der Holzwerkstoffplatte 1, also über die gesamte Länge der Holzwerkstoffplatte 1 zu erhalten, so dass durch die Betrachtung der Seitenfläche 2 der besäumten Holzwerkstoffplatte 1 Rückschlüsse auf eine Rohdichtevariation hinsichtlich der horizontalen Verteilung und der vertikalen Verteilung gezogen werden können.

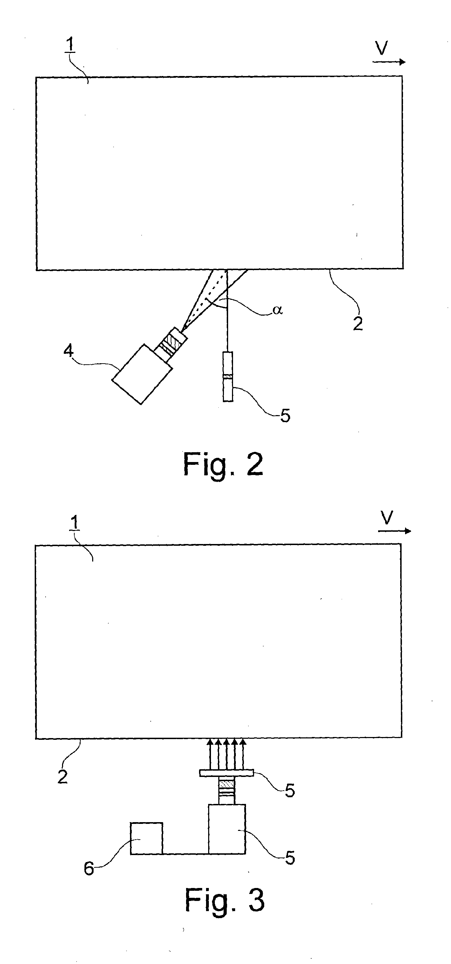

Figur 2 zeigt die Messanordnung der Figur 1 in Draufsicht. Es ist der Winkel α zwischen der Orientierung der Kameraeinrichtung 4 und des Linienlasers 5 in Richtung auf die Seitenfläche 2 der Holzwerkstoffplatte 1 zu erkennen. Neben der statischen Anordnung sowohl der Kameraeinrichtung 4 als auch der Beleuchtungseinrichtung 5 und der Bewegung der Holzwerkstoffplatte 1 an den beiden Komponenten vorbei ist es auch möglich, die Messeinrichtung aus Kameraeinrichtung 4 und Beleuchtungseinrichtung 5 relativ zu einer ruhenden Holzwerkstoffplatte 1 zu bewegen. Dann wäre es auch möglich, eine Untersuchung quer zur Vorschubrichtung an einer stirnseitigen Seitenfläche 2 der Holzwerkstoffplatte 1 durchzuführen.

Eine Variante der Erfindung ist in der Figur 3 dargestellt, in der die Kameraeinrichtung 4 senkrecht zur Seitenfläche 2 der Holzwerkstoffplatte 1 orientiert ist. Die Orientierung ist ebenfalls senkrecht zur Vorschubrichtung V. Die Kameraeinrichtung 4 ist als Zeilenkamera ausgebildet, die von einer Ringleuchte 5 umgeben ist. An der Kameraeinrichtung 4 angeschlossen ist eine Auswerteeinheit 6 in Gestalt eines Rechners, in der die erfassten Bilder der Kameraeinrichtung 4 hinsichtlich der Graustufenverteilung ausgewertet werden. Die Variante der Figur 3 hat gegenüber der Variante gemäß Figur 2 den Vorteil, dass die Beleuchtungseinrichtung 5 und die Kameraeinrichtung 4 zu einem gemeinsamen Modul zusammengefasst werden können, so dass nur eine einmalige Justierung in Richtung auf die Seitenfläche 2 der Holzwerkstoffplatte 1 durchgeführt werden muss. Darüber hinaus kann die Beleuchtungseinrichtung 5 in Gestalt einer Ringleuchte 5 sehr kompakt ausgebildet sein, Lasereinrichtungen oder eine besonders präzise Fixierung zweier Bauteile zueinander müssen nicht erfolgen.

Über Unregelmäßigkeiten in der Graustufenverteilung über die Dicke der Holzwerkstoffplatte 1 über die gesamte Länge der Holzwerkstoffplatte 1 an der Seitenfläche 2 ist es möglich, Ungleichmäßigkeiten in der Rohdichteverteilung zu erkennen. Wird an dem Materialstrang vor dem Auftrennen in einzelne Platten gemessen, so kann insbesondere eine Periodizität der Ungleichmäßigkeiten in der Rohdichteverteilung ermittelt werden, um dadurch Rückschlüsse auf systembedingte Einstellnotwendigkeiten ziehen zu können.

## Patentansprüche

1. Verfahren zur Bestimmung einer Dichteverteilung in einer Holzwerkstoffplatte (1) mit den Schritten:
- Aufnehmen einer Schmalseite (2) der Holzwerkstoffplatte (1) mit einer Kameraeinrichtung (4) nach dem Verpressen in einer kontinuierlichen Heißpresse und
- Auswerten der von der Kameraeinrichtung (4) erfassten Bilder über die Dicke der Holzwerkstoffplatte (1), wobei die Porigkeit der Holzwerkstoffplatte (1) erfasst wird.

2. Verfahren nach Anspruch 1, **dadurch gekennzeichnet, dass** die Aufnahme durch die Kameraeinrichtung (4) während der kontinuierlichen Fertigung der Holzwerkstoffplatte (1) durchgeführt wird.

3. Verfahren nach Anspruch 1 oder 2, **dadurch gekennzeichnet, dass** die Aufnahmen mit der Kameraeinrichtung (4) nach dem Besäumen durchgeführt werden.

4. Verfahren nach einem der voranstehenden Ansprüche, **dadurch gekennzeichnet, dass** die Aufnahmen mit einer Zeilenkamera durchgeführt und die Auswertung der erfassten Bilder über eine Graustufenauswertung erfolgt.

5. Verfahren nach einem der Ansprüche 1 bis 3, **dadurch gekennzeichnet, dass** die Aufnahmen mit einer Flächenkamera durchgeführt werden und der auch zu entnehmende Ausschnitt der Holzwerkstoffplatte (1) mit einem Linienlicht beleuchtet wird und die Auswertung über ein Triangulationsverfahren erfolgt.

6. Verfahren nach einem der voranstehenden Ansprüche, **dadurch gekennzeichnet, dass** als Holzwerkstoffplatte (1) OSB, Faserplatten, Wafer Boards oder Spanplatten verwendet werden.

7. Verfahren nach einem der voranstehenden Ansprüche, **dadurch gekennzeichnet, dass** die Periodizität der Dichteverteilung über die Vorschubrichtung (V) der Holzwerkstoffplatte (1) ermittelt wird.

8. Verfahren nach einem der voranstehenden Ansprüche, **dadurch gekennzeichnet, dass** die Dichteverteilung in einer Mittelschicht aufgelöst über die Dicke der Holzwerkstoffplatte (1) oder in zumindest einer gewählten Ebene des Querschnittes ermittelt wird.

9. Vorrichtung zur Durchführung des Verfahren nach einem der voranstehenden Ansprüchen, mit einer neben einer Holzwerkstoffplatte (1) angeordneten Kameraeinrichtung (4), einer Vorschubeinrichtung zur Relativverlagerung der Holzwerkstoffplatte (1) entlang der Schmalseite (2) zu der Kameraeinrichtung (4) und einer Auswerteeinrichtung (6), in der die von der Kameraeinrichtung (4) aufgenommenen Bilder über die Länge und Breite der Schmalseite (2) ausgewertet werden, wobei die Porigkeit der Holzwerkstoffplatte (1) erfasst wird.

10. Vorrichtung nach Anspruch 9, **dadurch gekennzeichnet, dass** die Kameraeinrichtung (4) als Zeilenkamera oder Flächenkamera ausgebildet ist.

11. Vorrichtung nach Anspruch 9 oder 10, **dadurch gekennzeichnet, dass** eine Leuchteinrichtung (5) zum Beleuchten der Schmalseite (2) der Holzwerkstoffplatte (1) dem Bildausschnitt der Kameraeinrichtung (4) zugeordnet ist.

12. Vorrichtung nach Anspruch 11, **dadurch gekennzeichnet, dass** die Leuchteinrichtung (5) als eine Ringleuchte oder als ein Linienlaser ausgebildet ist.

13. Vorrichtung nach Anspruch 11 oder 12, **dadurch gekennzeichnet, dass** die Leuchteinrichtung (5) und die Kameraeinrichtung (4) in einer konstanten Orientierung zueinander angeordnet sind.
